# EUROPEAN PATENT SPECIFICATION

(11) **EP 3 788 504 B1**
(45) Date of publication and mention of the grant of the patent: **23.11.2022**
(21) Application number: 18755574.3
(22) Date of filing: 06.06.2018
(51) Int. Cl.: G06F 16/2458

(54) **METHOD AND COMPUTERIZED DEVICE FOR PERFORMING A RANGE SEARCH IN NUMERIC TIME-SERIES DATA**
VERFAHREN UND COMPUTERISIERTE VORRICHTUNG ZUR DURCHFÜHRUNG EINER BEREICHSSUCHE IN NUMERISCHEN ZEITREIHENDATEN
PROCÉDÉ ET DISPOSITIF INFORMATISÉ POUR EFFECTUER UNE RECHERCHE DE PLAGE DANS DES DONNÉES NUMÉRIQUES EN SÉRIE CHRONOLOGIQUE

(43) Date of publication of application: 10.03.2021
(73) Proprietor: Siemens Aktiengesellschaft, 80333 München (DE)
(72) Inventor: PFEIFER, Uwe, 12557 Berlin (DE); KALINKIN, Mikhail Alexandrovich, St. Petersburg, 195220 (RU); KUZNETCOV, Yury Vladimirovich, St. Petersburg, 195257 (RU); TCYMBAL, Alexey Yurevich, St. Petersburg, 195298 (RU); ZOBNIN, Sergey Sergeevich, St. Petersburg, 196158 (RU)
(74) Representative: Isarpatent
(86) International application number: PCT/RU2018/000373
(87) International publication number: WO 2019/235957

(56) References cited:
- JP-A- 2005 063 385
- US-A1- 2013 103 657
- LING LIN ET AL: "Indexing values of time sequences", INFORMATION AND KNOWLEDGE MANAGEMENT, ACM, 2 PENN PLAZA, SUITE 701 NEW YORK NY 10121-0701 USA, 12 November 1996 (1996-11-12), pages 223-232, XP058181332, DOI: 10.1145/238355.238500 ISBN: 978-0-89791-873-2

## Description

The present invention relates to the field of industrial Big Data applications and, particularly, to a method and a computerized device for performing a range search in numeric time-series data acquired in an industrial facility.

Industrial facilities such as power plants are equipped with sensors supplying readings such as pressure or temperature. The readings are stored as time-series for later analysis. The amount of data stored for an industrial facility is approaching the tera- or petabyte level. Such numeric time-series data is typically stored in data warehouses or in a cloud.

There is a need to analyze the numeric time-series data for fault diagnosis, operation monitoring, predictive maintenance and similar purposes. An expert user may need to identify a time interval during which a given sensor supplied readings within a given amplitude range.

A linear scan through all data to identify the applicable time intervals is too costly in terms of data traffic, CPU traffic and takes too long to be of practical use. Known fast search mechanisms such as Google^{®} search are adapted to search in alphanumeric data and do not work well with numeric time-series data. A method and computerized device capable of performing an amplitude range search within terabytes of numeric time-series data within a sub-second response time is not known. The document US2013/103657A1 discloses a time-series management device capable of filtering time-series data having a possibility of matching a specified search pattern and reading in the data from a storage device when performing a time-series analysis. A data accumulation unit creates a time-series index having a feature value such as min/max of a data series calculated at a specific regular time interval, used to identified time periods to analyse for complying time-series data.

JP2005063385 discloses a method for performing fast pattern similarity searches in time-series data using histogram comparisons.

It is one object of the present invention to provide an improved computerized device and method for performing a range search in numeric time-series data.

Accordingly, a method for performing a range search in numeric time-series data according to appended claim 1, steps a) to f), is proposed.

It is noted that in step e), it is the index, and not the numeric time-series, that is processed to determine the time range that corresponds to the search request. The above steps d), e) and f) may therefore also be collectively referred to as "performing an index-based range search". Likewise, steps a), b) and c) may be referred to as "building an index adapted for an index-based range search".

By performing an index-based range search by processing the index rather than performing a direct or linear range search by processing the numeric time-series, it may be favorably possible to significantly reduce the processing time for determining the time range in response to the range search request.

Further, if the numeric time-series is stored in a data warehouse or a cloud, since the index is stored in the storage unit, costly data traffic to the data warehouse or to the cloud may be avoided in steps d), e) and f). Therefore, a cost for responding to the search request may be advantageously reduced.

Specifically, the method may be a computer-implemented method. In particular, the method may be may be carried out using at least one computerized device which may include one or more processing units, such as one or more CPUs, and one or more storage units, such as a hard disk, solid state disk, RAID storage, network-attached storage and the like.

The index may be a numeric index. The numeric index is adapted to provide a response to a search request including an amplitude range criterion. Advantageously, the index comprises information necessary and sufficient to determine the time range for which the numeric time-series is known to match the amplitude range criterion with a predetermined precision. Therefore, advantageously, step e) may be carried out with the predetermined precision without having to process the numeric time-series.

The index may favorably require less storage space than the numeric time-series itself. Thereby, processing the index in step e) may require less time than processing the numeric time-series. The index may thus be regarded as a compressed representation of the numeric time-series. The compressed index may be advantageously stored in the storage unit rather than in a cloud or data warehouse.

A reading may be a value originally provided by a sensor installed in an industrial facility, such as a temperature, a pressure, a power output or load, etc.

The numeric time-series may be an equidistant numeric time-series, which comprises, as data or information, a starting time, a time distance between readings, and a plurality of readings. Herein, "a plurality of readings associated with time" may refer to the fact that a respective time associated with each reading may be calculated by multiplying the time distance by a position of a respective reading in the numeric time-series and adding the result to the starting time. Alternatively, the numeric time-series may be a non-equidistant numeric time-series including, as data or information, a respective time value associated with each of the plurality of readings.

An amplitude range criterion may be a criterion that specifies a range (value range, amplitude range) within which readings are required to fall for the time-series to match the amplitude range criterion. Examples of the amplitude range criterion are criteria such as "between 3000 and 4000 rotations per minute" or "more than 300 megawatts", "less than 300 degrees Celsius". In other words, the amplitude range criterion may specify at least one of a lower and an upper boundary for readings that match the criterion.

The search request may constitute a digital representation of the amplitude range criterion.

The fact that "the numeric time-series is known to match the amplitude range criterion" for the time range determined in step e) (which is also referred to as "matching time range" hereinbelow) may refer to the fact that, based on the index, it is known that the numeric time-series comprises at least one reading (also referred to as "matching reading" hereinbelow) that is within the amplitude range specified by the amplitude range criterion and is associated with a time that is within the matching time range.

In step a), the numeric time-series may be acquired by directly receiving the plurality of readings from a sensor installed in an industrial facility and storing, in the time-series, a respective time of reception of each reading as the time associated with the reading.

Alternatively, the numeric time-series may have been received from the sensor in advance and stored in a data warehouse, a cloud or other storage medium. Herein, in step a), the numeric time-series may be acquired by reading the plurality of readings associated with time from the data lake, warehouse or storage medium.

In step b), processing the acquired numeric time-series may include crawling, or processing the numeric time-series reading by reading, and creating and/or updating the index, based on each of the readings, such that the index comprises information necessary and sufficient to provide a response to an amplitude range search request with the predetermined precision.

In step d), the search request may be received through an input unit, such as a keyboard, connected to a computerized device carrying out the method. Alternatively, the search request may be received via network from another computerized device.

In step e), processing the index may refer to accessing the index based on the amplitude range criterion. For example, the amplitude range criterion, or an upper or lower boundary comprised therein, may be used in a keyword-like manner to gain fast access to portions of the index containing information about a matching time range.

In step f), the determined time range may be output by displaying a human readable representation of the determined time range on a display device. The determined time range may also be output by transmitting a digital representation of the determined time range via a wired or wireless network.

It is noted that determining a matching time range and outputting the matching time range may also comprise determining a plurality of matching time ranges and outputting the plurality of matching time ranges.

A minimum length of the matching time range (each of the matching time ranges) may depend on the predetermined precision.

The first processing unit and the second processing unit may be configured by a same processing unit or by different processing units.

According to an embodiment, step c) further includes discarding the acquired time-series.

Since the acquired time-series is not used when performing the index-based range search in steps d), e) and f), it may be favorably discarded after the building of the index in steps a) and b) has been completed, so as to reduce an amount of storage space required by the proposed method.

According to the embodiments of the invention, the index is a lossy index.

The index may thus be regarded as a compressed representation of the numeric time-series that is compressed using lossy compression.

"Lossy" herein may refer to the fact that the index may comprise information necessary and sufficient to determine the matching time range with a predetermined precision, but may not comprise information sufficient to determine the actual readings of the numeric-time-series in the matching time range.

An amount of lossiness of the index may be adjusted so as correspond to the predetermined precision. Thereby, a tradeoff between speed of the index-based range search, storage space required to store the index, and the predetermined precision of the response to the search request may be suitably adjusted.

If the actual readings are of interest, once the time-range has been determined according to the proposed method using the lossy index, the precise readings of the numeric time-series and their precise associated times may be determined by accessing the numeric time-series based on the determined time-range. For example, only portions of the numeric time-series corresponding to the determined time-range may be accessed. This may favorably require less computing time and less data to be transferred from a cloud or data warehouse as compared to performing a linear search through the numeric time-series.

In particular, , the lossy index includes a quantization of the numeric time-series into time intervals according to a predetermined time resolution and into amplitude intervals according to a predetermined amplitude resolution.

In particular, the lossy index may comprise a quantization of the numeric time-series in time-amplitude space.

A respective quantization, herein, may refer to a result of quantizing (constraining, discretizing) the information, such as readings and/or times, included in the numeric time-series into a discrete set of said information.

The predetermined time resolution and the predetermined amplitude resolution may define the predetermined precision of the response to the search request and/or the amount of lossiness of the lossy index.

By quantizing the numeric time-series in this way, an amount of storage space required to store the lossy index and/or an amount of computing time required to access and/or process the lossy index may be reduced while advantageously retaining a desired predetermined precision of the response to the search request.

Additionally, the quantization of the time-amplitude space of the numeric time-series includes, for each of the time intervals, a histogram including, for each of the amplitude intervals, a bin indicative of readings of the numeric time-series that are within the amplitude interval and are associated with a time within the time interval.

A bin may be described as an amount of storage space of the storage unit, such as a byte, a word, or a long word. A value of the bin may be indicative of the occurrence of a reading and/or a number of readings within the amplitude interval associated with the bin and within the time interval associated with the histogram including the bin.

The structure of the index according to the present embodiment may allow to perform step e) by identifying a plurality of bin positions corresponding to the amplitude range criterion; and scanning the plurality of histograms to identify histograms in which a bin at one of the identified bin positions indicates occurrence of at least one matching reading. The matching time-range may then be determined to be a time range including the time intervals associated with the identified histograms.

Herein, advantageously, an amount of histograms to be scanned may depend solely on the predetermined precision (in particular, the predetermined time resolution) and may favorably not depend on an amount of readings included in the numeric time-series. For example, if the predetermined time resolution is N percent, N histograms are scanned, even though the numeric time-series may comprise thousands or millions of readings.

Thereby, an amount of processing time for determining the matching time range in step e) may be reduced significantly.

Likewise, an amount of storage space required to store the index may depend solely on the predetermined time resolution (number of histograms) and the predetermined amplitude resolution (number of bins in each histogram), and the width of a respective bin, and may favorably not depend on an amount of readings included in the numeric time-series.

Thereby, an amount of storage space for storing the index may be reduced significantly over the amount of storage space for storing the actual numeric time-series.

The index may thus be advantageously stored in a local storage unit, such as a hard disk of a local workstation, even in a case where the actual numeric time-series comprises Big Data that may only be stored in a data warehouse or a cloud.

According to a further embodiment, a respective histogram is a flat histogram, wherein a respective bin is a binary flag indicative of whether the numeric time-series includes at least one reading that is within the amplitude interval and is associated with a time within the time interval.

In other words, for each bin, information on how many matching readings belong to the bin may be disregarded. A respective bin may only retain information on the mere fact whether or not at least one reading associated with a time within the time interval of the histogram of the bin is within the amplitude interval associated with the bin.

Thereby, an amount of space for storing the index may be further reduced to as low as one bit per bin.

Furthermore, in step e), identifying a plurality of bin positions corresponding to the amplitude range criterion may comprise creating a bit mask, and scanning the plurality of histograms to identify histograms in which a bin at one of the identified bin positions indicates occurrence of a reading may comprise applying the bit mask to each histogram and checking if the result is non-zero. Thus, by using flat histograms including binary bins, step e) may be carried out efficiently using low-level bit mask operations, which may further reduce an amount of computing time required to perform step e).

According to a further embodiment, the lossy index includes a plurality of quantizations of the numeric time-series into a series of different time intervals according to different predetermined time resolutions.

As noted above, the predetermined time resolution corresponds to an amount of data to be processed and to a processing time required for identifying the matching time range. Specifically, by reducing the time resolution, the amount of data to be processed may be reduced and a time required to identify a matching time range may be reduced.

For example, the different predetermined time resolutions may include a first time resolution and a second time resolution that is higher than the first time resolution.

According to the example, it may therefore be possible to quickly identify a matching time range with the first ("low") time resolution by accessing the quantization according to the first (or "low") time resolution. Thereafter, a matching time range may be identified with the second (or "high") time resolution by accessing only portions of the quantization according to the second time resolution that correspond to the already identified time range with the first resolution.

Thereby, it may advantageously be possible to reduce an amount of data to be processed and to reduce a processing time for identifying the matching time range even in a case where a high time resolution is required.

According to a further embodiment, the plurality of different predetermined time resolutions is a logarithmic series of time resolutions.

"Logarithmic", herein, refers generally to a series with changing dimensions, or orders, of time. For example, a logarithmic series of time resolutions may also be a series of time resolutions (or time interval lengths) such as 365 days, 30 days, 1 day, 1 hour, 1 minute.

Thereby, it may be possible to first identify a matching year, then identify matching months only within the matching years, then identify matching hours only within the matching days, then identify matching minutes only within the matching hours.

It may therefore be possible to further reduce the amount of index data to be processed and the processing time for identifying a matching time range with minute resolution even for a numeric time-series that may comprise data of several years.

According to a further embodiment, the acquiring step a) is executed repeatedly for different portions of the numeric time-series; and the processing step b) to derive the index includes creating the index upon a first execution of the acquiring step a), and includes updating the index upon each subsequent execution of the acquiring step a).

Updating the index for a respective portion of the numeric time-series may be achieved, in some embodiments, by updating the plurality of bins of the plurality of histograms according to the readings in the portion of the numeric time-series without discarding or resetting existing contents of the bins.

Thereby, the time-series may be acquired portion-by-portion, and an amount of local memory and/or local storage space required for acquiring the time-series may be reduced. Likewise, easy and efficient updates may be possible when further portions/ further readings are added to the numeric time-series over time. In particular, such updates may be advantageously performed without repeating acquisition of the already acquired portions, thereby reducing an amount of data to be transferred for each update.

According to a further embodiment, the time range determined in step e) is a time range that includes a time for which the numeric time-series is known to include at least one reading within an amplitude range specified by the amplitude range criterion, and excludes a time for which the numeric time-series is known not to include any reading within the specified amplitude range.

In other words, it may not be possible to determine an exact time of occurrence of a matching reading, however it may be possible to determine a matching time range with the predetermined precision. That is, the time of occurrence of the matching reading may be narrowed down according to the predetermined time resolution.

According to a further embodiment, a non-contiguous and non-overlapping plurality of smallest time ranges matching the amplitude range criterion is determined in step e) and output in step f).

Specifically, by processing the index as described in the preceding embodiments, it may preferably be possible to identify a plurality of time intervals which comprise a matching reading ("matching time intervals"). The matching time intervals may then be combined into matching time ranges, wherein each matching time range comprises one or more matching time interval. In particular, adjacent time intervals may be combined into a matching same matching time range. Thereby, a non-contiguous and non-overlapping plurality of smallest matching time ranges may be determined.

Advantageously, thereby, a maximum of available information may be presented to the operator by processing the index alone and without having to access the numeric time-series itself.

According to a further embodiment, in step d), the search request includes a logical expression formed by one or more amplitude range criteria and one or more logical operators, and in step e), a time range is determined for which the numeric time-series is known, based on the index, to match the logical expression.

A logical operator may be a Boolean operator such as logical "AND", logical "OR" or logical "NOT".

According to one variant, step e) may be repeated for each of the amplitude range criteria to determine a respective matching time range for which the numeric time-series is known to match a respective amplitude range criterion. A number of matching time ranges determined in this way may then be joined (in case of logical "OR"), intersected (in case of logical "AND") or negated (in case of logical "NOT") to form the matching time range for which the numeric time-series is known to match the logical expression.

According to another variant, for each of the amplitude range criteria, a respective bit mask for use with the plurality of flat histograms and corresponding to a respective amplitude range criterion may be created. The number of bit masks created may then be joined, intersected or negated according to the logical operators, to thereby create a single bit mask corresponding to the logical expression. Step e) may then be executed once using the single bit mask corresponding to the logical expression. That is, a processing time to provide a response to the search request including a logical expression may be further reduced. A single traversal of the index may be sufficient to provide the response.

According to the present embodiment, the method may advantageously support complex and sophisticated search requests.

According to a further embodiment, a plurality of numeric time-series are acquired in step a), a plurality of indices corresponding to the plurality of time-series are derived in step b), and stored in step c), and a respective of the one or more amplitude range criteria may further include an indication indicative of a respective numeric time-series of the plurality of numeric time-series.

Thereby, complex search requests correlating different readings from different numeric time-series may be made possible, such as "temperature greater than 500 degrees Celsius AND power lower than 300 Megawatts").

According to a further embodiment, in step a), the numeric time-series is acquired from a sensor installed in an industrial facility.

The numeric time-series may be acquired directly from the sensor. Alternatively, the numeric time-series may be acquired and stored in a data warehouse or cloud, and acquiring the numeric time-series in step a) may comprise reading the numeric-series, portion-by-portion, from the data warehouse or cloud.

Any embodiment of the first aspect may be combined with any embodiment of the first aspect to obtain another embodiment of the first aspect.

According to a further aspect, a computer program product comprises a program code for executing the above-described method for performing a range search in numeric time-series data, when run on at least one computer.

A computer program product, such as a computer program means, may be embodied as a memory card, USB stick, CD-ROM, DVD or as a file which may be downloaded from a server in a network. For example, such a file may be provided by transferring the file comprising the computer program product from a wireless communication network.

According to a further aspect, a computerized device for performing a range search in numeric time-series data is defined according to appended claim 12.

The embodiments and features described with reference to the method of the present invention apply mutatis mutandis to the computerized device of the present invention. Specifically, the computerized device of the present invention may be implemented to carry out the method of the present invention. The respective entity, e.g. the at least one processing unit, the storage unit and/or the first to fifth entity, may be implemented in hardware and/or in software. If said entity is implemented in hardware, it may be embodied as a device, e.g. as a computer or as a processor or as a part of a system, e.g. a computer system. If said entity is implemented in software it may be embodied as a computer program product, as a function, as a routine, as a program code or as an executable object.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
Fig. 1 shows a flow chart illustrating steps of a method according to an exemplary embodiment;
Fig. 2 shows a block diagram of a computerized device according to the exemplary embodiment;
Fig. 3 shows a diagram illustrating one example of a numeric time-series;
Fig. 4 illustrates a quantization of the numeric time-series illustrated in Fig. 3 into a plurality of flat histograms each including a plurality of bins;
Fig. 5 illustrates a plurality of quantizations of the numeric time-series into a series of different time intervals;
Fig. 6 shows a block diagram of a computerized device according to a preferred variant of the exemplary embodiment, an industrial facility and further periphery;
Fig. 7 shows a flow chart illustrating steps of the method according to a preferred variant of the exemplary embodiment;
Fig. 8 illustrates a bit mask used to perform a range search according to an exemplary use case;
Fig. 9 illustrates histograms traversed during a range search according to the exemplary use case; and
Fig. 10 shows a table illustrating numbers of available and traversed histograms according to the exemplary use case.

In the Figures, like reference numerals designate like or functionally equivalent elements, unless otherwise indicated.

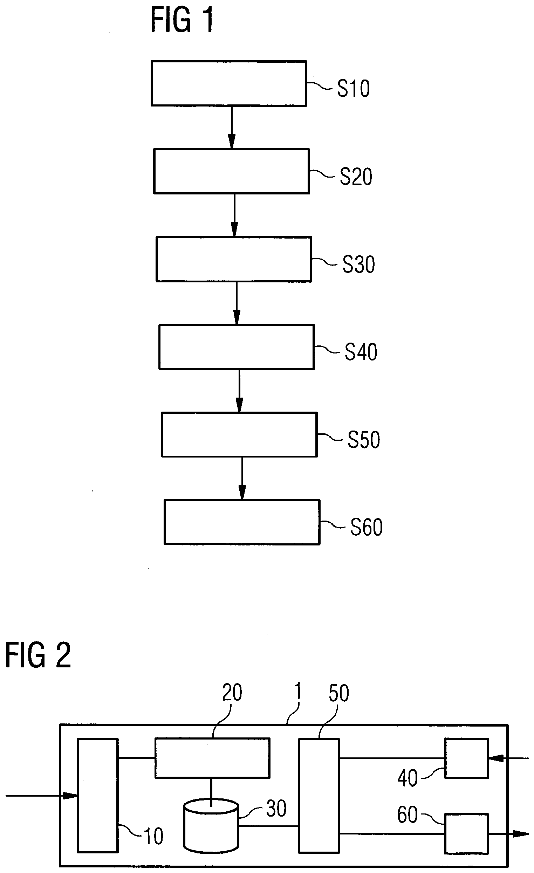

Fig. 1 shows a flow chart illustrating steps of a method, and Fig. 2 shows a block diagram of a computerized device 1 according to an exemplary embodiment. Reference will now be made to Fig. 1 and Fig. 2.

The computerized device of the exemplary embodiment will be referred to as range search device 1. The range search device 1 comprises a crawler 10 (example of a first entity), an indexer 20 (example of a second and third entity), a storage unit 30, a numeric search engine 50 (example of a fifth entity) and a serving layer API (Application Programming Interface) 40, 60 comprising a receiving section 40 (fourth entity) and a transmitting section 60 (sixth entity).

In step S10, the crawler 10 temporarily acquires a numeric time-series including a plurality of readings associated with time. In step S20, the indexer 20 processes the acquired numeric time-series and derives an index from the plurality of readings associated with time that are included in the numeric time-series. In step S30, the indexer 20 stores the index in the storage unit 30.

In step S40, the receiving section 40 of the serving layer API 40, 60 receives a search request. The search request comprises an amplitude range criterion. The receiving section 40 transmits the amplitude range criterion to the numeric search engine 50.

In step S50, the numeric search engine 50 accesses the index stored in the storage unit 30 using the amplitude range criterion as a key. More specifically, the numeric search engine 50 traverses the index stored in the storage unit 30 to determine one or more time ranges for which the numeric time-series is known to match the amplitude range criterion (also referred to as "matching time ranges").

In step S60, the one or more matching time ranges determined in step S50 are output by the transmitting section 60 of the serving layer API 40, 60 as a response to the search request. Thus, a response to the search request may be advantageously determined by performing a fast index-based range search. The index-based range search does not use the numeric time-series and may therefore obviate the need for costly data transfers between the range search device 1 and a data warehouse or a cloud storing the numeric time-series.

Since the temporarily acquired numeric time-series is not used in any of steps S40, S50, S60, according to a preferred variant, it is discarded after step S30. In other words, according to the preferred variant, no portion of the numeric time-series is permanently stored in the range search device 1.

According to a variant, the serving layer API 40, 60 may be configured to receive a request, such the search request, via a wired or wireless network and to transmit a response, such as the matching time range, via the wired or wireless network.

According to a variant, each of the crawler 10, the indexer 20, the numeric search engine 50 and the serving layer API 40, 60 may be embodied by a computer program product stored in a memory (not shown) and executed on a processor (not shown) of the computerized device 1. According to an alternative variant, some or all of the entities 10, 20, 50, 40, 60 may be embodied in hardware.

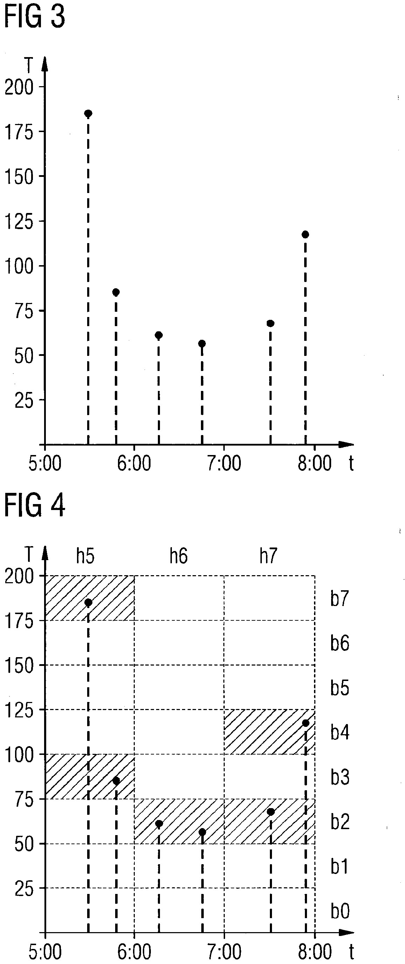

Fig. 3 shows a diagram illustrating one example of a numeric time-series that may be used in the method and the computerized device (1 in Fig. 1) of the exemplary embodiment. The numeric time-series shown in Fig. 3 comprises seven readings visualized as dots. It is noted that the small number of seven readings illustrated in Fig. 3 is merely used by way of example to facilitate understanding.

In particular, the numeric time-series shown in Fig. 3 is a non-equidistant numeric time-series and comprises the temperature readings T=187,5 °C at time t=5:30, T=87,5 °C at time 5=5:50, T=62,5 °C at time t=6:15, T=60 °C at time t=6:55, T=70 °C at time 7:30 and T=120 °C at time 7:50.

Fig. 3 shows a time-amplitude space of the numeric time-series, but it will be understood that the numeric time-series may be stored, acquired by the crawler (10 in Fig. 1) etc., as a sequence of data, such as floating-point values and the like. According to a further variant, the numeric time-series may also be acquired by sampling an analog signal.

Fig. 4 illustrates a quantization of the numeric time-series illustrated in Fig. 3 in time-amplitude space into a plurality of flat histograms h5, h6, h7 each including a plurality of bins b0-b7 according to a preferred variant of the exemplary embodiment.

Specifically, and merely by way of example, a predetermined time resolution (time interval length) is selected to be 1 hour, and a predetermined amplitude resolution (amplitude interval range) is selected to be 25 °C.

Each of the bins b0-b7 of each of the histograms h5-h7 comprises a binary flag indicating either occurrence (shown as a rectangle with a hatched area filling) or no non-occurrence (shown as an empty rectangle) of a matching reading in a temperature amplitude interval associated with the respective bin b0-b7 and a time interval associated with the histogram h5-h7 of the respective bin b0-b7.

Specifically, bin b7 of histogram h5, which is associated with the amplitude interval T=175 °C-200 °C and the time interval t=5:00-6:00, comprises a flag indicating occurrence of the reading T=187,5 °C at time t=5:30. Bin b3 of flat histogram h5, which is associated with the amplitude interval T=75 °C-100 °C and the time interval t=5:00-6:00, comprises a flag indicating occurrence of the reading T=87,5 °C at time 5=5:50. Bin b2 of flat histogram h6, which is associated with the amplitude interval T=50 °C-75 °C and the time interval t=6:00-7:00, comprises a flag indicating occurrence of the readings T=62,5 °C at time t=6:15 and T=60 °C at time t=6:55. Bins b2 and b4 of flat histogram h7, which are associated with the time interval t=7:00-8:00 and respective amplitude intervals T=50 °C-75 °C and T=100 °C-125 °C, comprise respective flags indicating occurrence of the readings T=70 °C at time 7:30, and T=120 °C at time 7:50, respectively. Any other bins comprise a flag indicating no occurrence of a matching reading.

The series of flat histograms h5-h7 shown in Fig 4 may be stored in the storage unit 30 (Fig. 2). A respective binary flag comprised by a respective of the bins b0-b7 may be represented as a single bit. For example, a bit value of 1 may indicate occurrence and a bit value of 0 may indicate no occurrence of a matching reading. Each flat histogram h5 to h7 may be represented as 8 bits or one byte. Thereby, the index visualized in Fig. 4 may be stored in as few as 3 bytes of storage space of the storage unit 30 (Fig. 2).

Reference is now made to Fig. 4 in conjunction with Fig. 2 to describe a further preferred variant of the exemplary embodiment.

When the crawler 10 temporarily acquires the numeric time-series (dots in Fig. 4), the indexer 20 derives an index as visualized in Fig. 4 from the acquired numeric time-series and stores the index in the storage unit 30.

Thereafter, the temporarily acquired numeric time-series is discarded. In the visualization of Fig. 4, this may correspond to deleting the dots representing readings in Fig. 4.

A search request is received by the receiving section 40 of the serving layer API of the range search device 1. The search request may include an amplitude range criterion such as "T>=100 °C AND T<=125 °C", which is provided to the numeric search engine 50.

In response to the amplitude range criterion, the numeric search engine 50 traverses the index stored in the storage unit 30. Specifically, for the amplitude range criterion "T>=100 °C AND T<=125 °C", the numeric search engine 50 checks bin b4 of each of flat histograms h5, h6 and h7 to determine whether a respective bin b4 contains a binary flag indicating occurrence of a matching reading. No occurrence is found for flat histograms h5 and h6. However, for flat histogram h7, bin b4 indicates occurrence of a reading matching the amplitude range criterion. Based on identifying bin b4 of flat histogram h7, the numeric search engine 50 determines the time range associated with histogram h7, i.e. t=7:00-8:00, as a matching time range.

The transmitting section 60 of the serving layer API 40, 60 outputs the determined time range t=07:00-8:00 in response to the search request including the amplitude criterion "T>=100 °C AND T<=125 °C".

In a similar fashion, in response to a search request for "T>=50 °C AND T<=75 °C", the range search device 1 may respond with a time range t=06:00-08:00, which comprises two matching time intervals t=6:00-7:00 and t=7:00-8:00.

Likewise, in response to a search request including a plurality of logical expressions such as "T>=175 °C OR (T>=100 °C AND T<=125 °C)", the range search device 1 may respond with two matching time ranges t1=5:00-6:00 and t2=7:00-8:00.

Specifically, the receiving section 40 may divide the search request into a first amplitude range criterion "T>=175 °C" and a second amplitude range criterion "T>=100 °C AND T<=125 °C". The numeric search engine 50 may determine the time range tl=5:00-6:00 to the first amplitude range criterion, and may determine the time range t2=07:00-8:08 in response to the second amplitude range criterion. The numeric search engine 50 may further determine that the time ranges t1 and t2 are non-contiguous. Therefore, the numeric search engine 50, when joining the time ranges t1 and t2 in response to the logical "OR" operator, may refrain from combining the time ranges t1 and t2 into a single time range ts=5:00-8:00, and rather supply the plurality of time ranges t1=5:00-6:00 and t2=7:00-8:00 to the transmitting section 60 of the serving layer API of the range search device 1 as a result of said joining. Specifically, the response may exclude a time from 6:00 to 7:00, for which the numeric time-series is known not to include any reading matching the logical expression of the search request.

Conversely, for a search request such as "T>=50 °C AND T<=75 °C", the numeric search engine 50 may determine that the time intervals t3=6:00-7:00 and t4=7:00-8:00 are contiguous and may merge the time intervals t3 and t4 into a single matching time range t=6:00-8:00.

Thereby, the range search device 1 may respond to a range search request with a non-contiguous and non-overlapping plurality of smallest time ranges for which the numeric time-series is known to match the search request (amplitude range criterion and/or logical expression including a plurality of amplitude range criteria).

It is noted that the range search device 1 (numeric search engine 50) may determine the one or more matching time ranges described above with a small amount of processing, by referring to a mere total of three bytes of data, i.e. the bins b0-b7 of the flat histograms h5-h7 shown in Fig. 4, and without having to refer to the numeric time-series (dots in Fig. 4), which has preferably been discarded.

Responses provided by the range search device 1 may be precise up to a predetermined precision determined by the predetermined time amplitude of 1 hour and the predetermined temperature amplitude of 25 °C. Therefore, the index stored in the storage unit 30 may also be referred to as a lossy index.

The lossy index therefore can be seen as implementing a tradeoff between a desired precision of the response, a desired amount of storage space used by the index in the storage unit 30, and a desired amount of processing time required by the range search device 1 to provide the response.

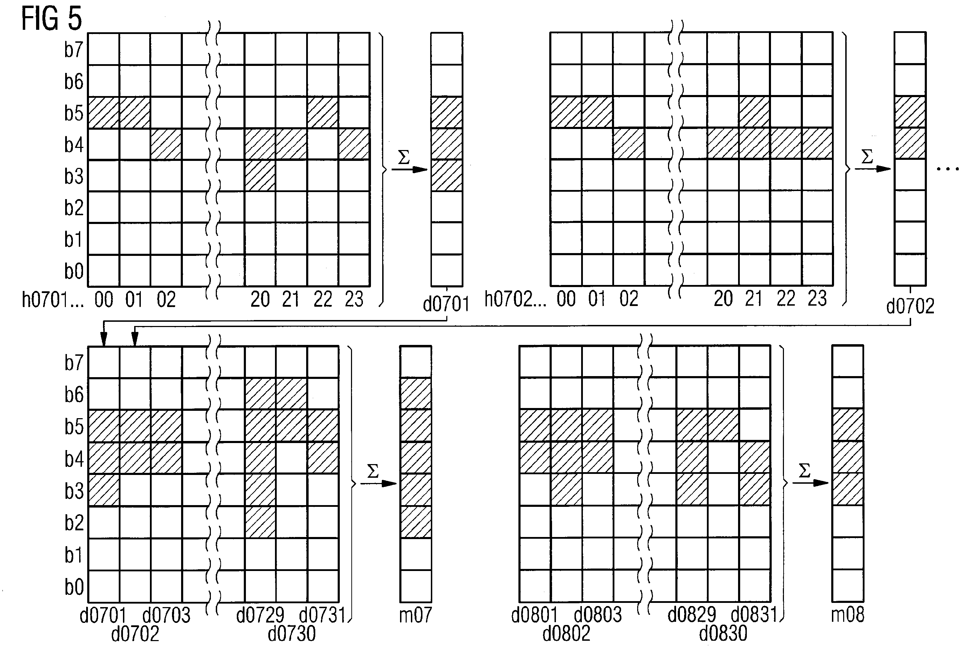

A further preferred variant and a technique having a favorable effect on this tradeoff will now be described in conjunction with Fig. 5 and Fig. 2.

Fig. 5 illustrates an index stored in the storage unit 30 of a range search device 1 (Fig. 2) according to a further preferred variant of the exemplary embodiment. The index constitutes a plurality of quantizations of the numeric time-series into a series of different time intervals.

More specifically, the index shown in Fig. 5 has been derived by the indexer 20 for a time period spanning the two months of July (indicated as 07) and August (indicated as 08) of a given year. The predetermined time resolution, or first interval, has been selected to be one hour. The index thus comprises a first plurality of hourly histograms h070100-h083123 (only some of the hourly histograms h070100-h070223 are shown in Fig. 5). It is noted that the notation haabbcc denotes an hourly histogram for month aa, day bb and hour cc.

The structure, features and benefits of the first plurality of hourly histograms h070100-h083123 are similar to the structure of the flat histograms h5-h7 of Fig. 4, and a description thereof will not be repeated. Also the hourly histograms h070100-h083123 are flat histograms.

The index shown in Fig. 5 further comprises a second plurality of daily histograms d0701-d0831 (only some of which are shown). The time resolution of the second plurality of histograms d0701-d0831 is 24 hours or 1 day.

A respective daily histogram d0701-d0831 may be created by the indexer 20 (Fig. 2) by adding respective hourly histograms corresponding to the respective daily histograms d0701-d0831. In Fig. 5, daily histogram d0701 may be obtained by the indexer 20 (Fig. 2) by adding hourly histograms h070100-h070123. Daily histogram d0702 may be obtained by adding hourly histograms h070200-h070223, and so on.

Since the respective hourly, daily and monthly histograms are flat histograms, adding two respective histograms may comprise combining the histograms using a logical OR operation.

For example, at least one of bins b5 of the daily histograms h070100-h070123 comprises a binary flag indicating occurrence of a matching reading. Therefore, the corresponding bin b5 of daily histogram d0701 comprises a binary flag indicating occurrence of a matching reading. None of bins b6 of any of the daily histograms h070100-h070123 comprises a binary flag indicating occurrence of a matching reading. Therefore, the corresponding bin b6 of daily histogram d0701 comprises a binary flag indicating no occurrence of a matching reading.

In a similar manner, daily histograms d0701-d0731 (only partly shown) are added to form a monthly histogram m07. Likewise, daily histograms d0801-d0831 (not shown) are combined to form a monthly histogram m08.

In other words, the index shown in Fig. 5 comprises three pluralities of flat histograms (hourly histograms, daily histograms, monthly histograms), wherein each plurality of flat histograms constitutes a quantization of the numeric time-series into a respective time-interval (hours, days, months) days according to a respective predetermined time resolution (1 hour, 24 hours = 1 day, 672, 696, 720 and/or 744 hours = 1 month). The plurality of different predetermined time resolutions may therefore be described as a series of time resolutions of different orders (hours, tens of hours, hundreds of hours), or as a logarithmic series of time resolutions.

It is further noted that the index shown in Fig. 5 comprises a total of 1488 hourly histograms, a total of 62 daily histograms, and a total of two monthly histograms.

When responding to a search request including an amplitude range criterion such as "T>=150 °C AND T<=175 °C", the numeric search engine 50 (Fig. 2) may traverse the index shown in Fig. 5 starting at the lowest (monthly) time resolution and advancing towards higher (daily, hourly) time resolutions.

Specifically, the numeric search engine 50 (Fig. 2) may translate the amplitude range criterion "T>150 °C and T<175 °C" into a bin position b6 (which is associated with the corresponding amplitude range, see e.g. Fig. 4). The numeric search engine 50 (Fig. 2) may then proceed to check the monthly histograms m07, m08 and determine that only monthly histogram m07 has a bin b6 including a flag indicating occurrence of a matching reading. The numeric search engine 50 (Fig. 2) may then advance to check the daily histograms corresponding to month July (07), i.e., the daily histograms d0701-d0731 and may determine that only daily histograms d0729 and d0730 have a bin b6 including a flag indicating occurrence of a matching reading. However, the numeric search engine 50 (Fig. 2) may omit checking the daily histograms corresponding to month August (08), i.e., the daily histograms d0801-d08031, because the monthly histogram m08 (bin b6) indicates that there are no readings for August that match the amplitude range criterion.

In the same manner, the numeric search engine 50 (Fig. 2) may then advance to check individual hourly histograms h072901-h072923 and h073001-h023023 (not shown) to determine the hours for which the numeric time-series is known, based on the index (hourly histograms) to comprise at least one reading that matches the amplitude range criterion.

That is, instead of a total of 1488 hourly histograms, only 48 histograms need to be checked.

Thus, by using the multi-layered index shown in Fig. 5, a processing time used for responding to a range search request by the range search device 1 according to the preferred variant of the exemplary embodiment may be further reduced while maintaining a comparatively high time resolution.

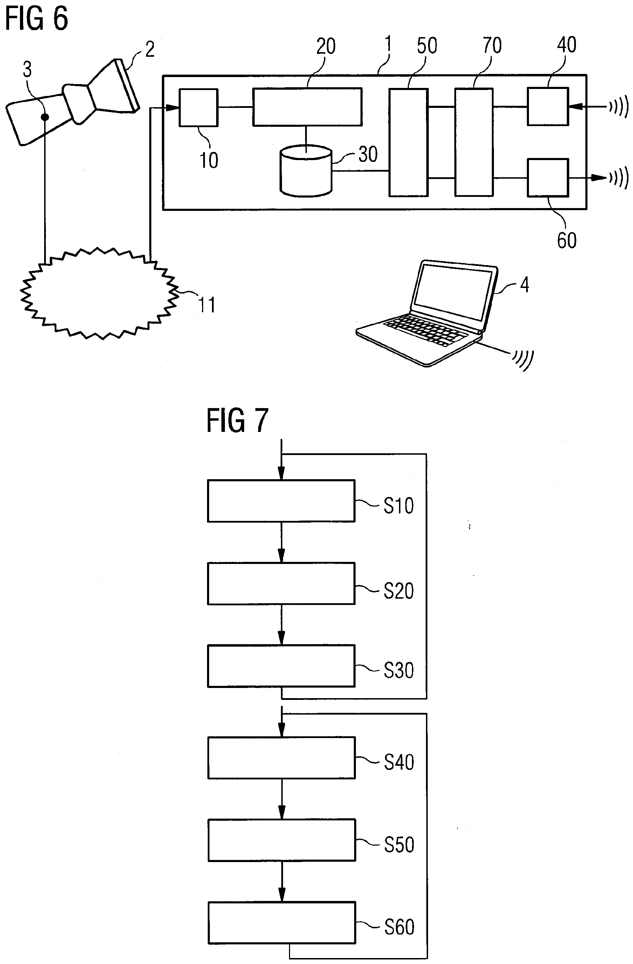

A further preferred variant of the exemplary embodiment is now described with reference to Fig. 6.

Fig. 6 shows a block diagram of a range search device 1 according to a further preferred variant of the exemplary embodiment, an industrial facility and further periphery.

Specifically, Fig. 6 shows a gas turbine 2 (example of a portion of an industrial facility), a data warehouse 11, the range search device 1 and a personal computer 4. The range search device 1 of Fig. 6 comprises, in addition to the elements already described in connection with the range search device 1 of Fig. 4, a cache 70 to be described later.

The gas turbine 2 is equipped with a sensor 3. The sensor supplies a signal, such as an analog or a digital signal, indicative of values, such as temperature values or the like. The values are stored as readings in association with time in a numeric time-series in the data warehouse 11. In particular, a reading may be stored in the numeric time-series at least once per hour or whenever a value supplied by the sensor changes by more than a predetermined amount. Over time, a large amount, such as gigabyte or petabytes of data, is accumulated in the numeric time-series stored in the data warehouse 11. The data warehouse 11 may be implemented as a cloud storage, as a Hadoop HDFS or Hive filesystem, or as a centralized server farm.

A user of the personal computer 4 may be a technician who is interested in performing offline analysis of the gas turbine 2. For example, the technician may want to know in which time ranges a certain operating condition existed in the gas turbine 2. For example, the technician may want to know during which time ranges a temperature value (reading) measured by the sensor 3 exceed a predetermined threshold such as 195 °C.

However, the numeric time-series is stored in the data warehouse 11, and performing a linear search for corresponding readings in terabytes of data stored in the data warehouse 11 may be prohibitively slow and costly.

Therefore, the user of the personal computer 4 may use a client software, such as a web client, which is installed on the personal computer 4, to wirelessly transmit a range search request including an amplitude range criterion, such as "T>=195 °C", to the range search device 1.

The range search device 1 may respond to the range search request with a response indicating one or more matching time ranges.

For example, the web client may be a web browser displaying a web page that includes JavaScript code. For example, sending the range search request and responding to the range search request may involve communication between the web client and the range search device according to a Representational State Transfer API or REST API.

As has been discussed hereinabove, the time range outputted by the range search device 1 may be precise up to a predetermined amplitude resolution and a predetermined time resolution.

However, in response to receiving the response from the range search device 1, a computer program product implemented on the personal computer 4 may access the data warehouse 11 while requesting precise readings and precise times only for the matching time ranges included in the response from the range search device 1.

Thereby, a user may be provided with precise readings and precise times of interest while, advantageously, less data is requested from the data warehouse 11, less data is transferred, and a cost incurred while transferring said data from the data warehouse 11 is reduced.

Preferential details of the mode of operation of the range search device 1 according to the further preferred variant will now be discussed with reference to Fig. 6 and Fig. 7. Fig. 7 shows a flow chart illustrating steps of the method according to the further preferred variant of the exemplary embodiment.

Specifically, an amount of data occupied by the numeric time-series stored in the data warehouse 11 may be larger than a capacity of a memory (not shown) or the storage unit 30 of the computerized range search device 1. Therefore, the range search device 1 of Fig. 6 may be configured to execute steps S10, S20 and S30 in loops (see Fig. 7). Specifically, in step 10, for each loop, the crawler 10 acquires a different portion of the numeric time-series stored in the data warehouse 11. In steps S20 and S30, for the first loop, the indexer 20 creates and stores the index in the storage unit 30 based on the acquired portion of the numeric time-series. For each following loop, the indexer 20 updates the index stored in the storage unit 30 based on the respective acquired portion of the numeric time-series.

In a preferred variant where the index stored in the storage unit 30 comprises the plurality of histograms described in connection with Fig. 4 and Fig. 5, updating the index may comprise adding a respective of a plurality of histograms created from the currently acquired portion of the numeric time-series to a corresponding one of a plurality of histograms stored in the storage unit 30, which is representative for the one or more previously acquired portions of the numeric time-series. If the histograms are flat histograms, adding any two histograms may be achieved by combining the respective two histograms using a logical OR operation.

Thereby, advantageously, the crawler 10 and the indexer 20 may build the index stored in the storage unit 30 step by step without having to acquire the numeric time-series in its entirety. A less costly low priority communication link may be used for building the index over a certain amount of time.

When the index is built, the range search device 1 is ready to respond to search requests. Specifically, the receiving section 40 may wirelessly receive a search request in step S40, the numeric search engine 50 may determine one or more matching time ranges in step S50, and the transmitting section 60 may wirelessly transmit a response including the one or more matching time ranges in step S60.

Steps S40, S50 and S60 may also be executed in loops, i.e., steps S40, S50 and S60 may be executed every time a search request is received by the receiving section S40.

A cache 70 may be provided to further accelerate the providing of the response. Specifically, the cache 70 may store previous responses to previous search requests. If a newly received search request matches a previous search request, the previous response provided by the cache 70 may be transmitted in step S60 without having to use the numeric search engine 50 in step S50.

According to a preferred further development, a second cache (not shown) may be coupled between the storage unit 30 and the search engine 50. The second cache may be implemented as a RAM or other type of volatile memory. Copies of portions of the index stored in the storage unit 30 may be stored in the second cache. If the index comprises a plurality of quantizations according to different time resolutions, the second cache may store copies of the quantizations (pluralities of histograms) according to the lowest (coarsest) time resolutions, for example, at yearly and monthly level. Thereby, when the search engine 50 traverses the index, initially, matching years and matching months may be identified by accessing the copies of portions of the index stored in the second cache rather than by accessing the index stored in the storage unit 30. Thereby, providing the response may be further accelerated.

After the index has been built as described above, further readings may be added to the numeric time-series stored in the data warehouse 11 over time. Therefore, the range search device 1 may continue to perform steps S10, S20, S30 in loops in predetermined intervals after the index has been initially built. That is, the crawler 10 may continue crawling. When new readings (a new portion of the numeric time-series) are detected by the crawler 10, the crawler 10 acquires the new portion of the numeric time-series (steps S10), the indexer 20 updates the index stored in the storage unit 30 (step S20 and S30), and the cache 70 invalidates its contents. Thereby, the index may be kept up to date as new readings are acquired from the gas turbine 2 over time.

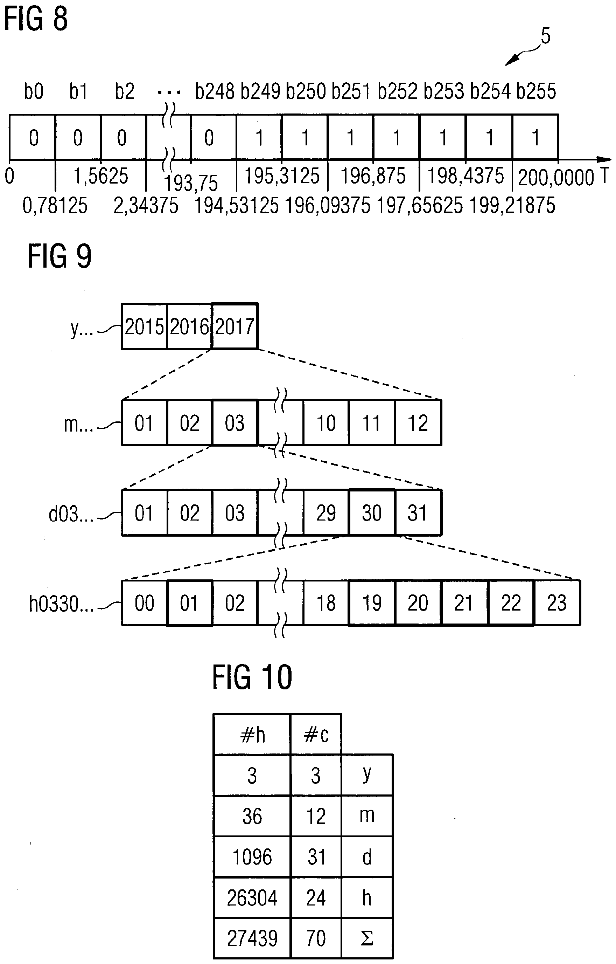

To further illustrate the applicability and benefits of the proposed method and computerized device, an exemplary use case will now be described. Particular reference will be made to Fig. 8, Fig. 9 and Fig. 10.

Fig. 8 illustrates a bit mask 5 used to perform a range search according to the exemplary use case. Fig. 9 illustrates histograms traversed during a range search according to the exemplary use case. Fig. 10 shows a table illustrating numbers of available and traversed histograms according to the exemplary use case.

In the exemplary use case, flat histograms including 256 bins each are used. In this way, each bin may cover 1/256 or 0,4% of a total amplitude range. In the exemplary use case, temperature readings are expected to be within 0 and 200 °C. That is, the 256 bins of each histogram are associated with requested amplitude ranges such that a total amplitude range covered by the histogram is from 0 to 200 °C. Thereby, a predetermined amplitude resolution of +/-0,78 °C may be attained.

A numeric time-series is stored in the data warehouse 11 (Fig. 7). The numeric time-series comprises temperature readings associated with times from a time period of the three years of 2015, 2016, 2017. It is noted that the year of 2016 is a leap year having 366 days, while years 2015 and 2017 have 365 days each, so the total time range covered is 1096 days. Let us suppose that the numeric time-series comprises one reading every second. Each temperature reading may be stored as a double float value requiring 8 bytes of storage space. A minimum amount of storage space required for storing just one numeric time-series is therefore 757,555,200 bytes. The amount of storage space required for every time-series may be even larger if the readings are stored as textual data, XML data or the like, or are stored in association with meta data such as time stamps, status flags and the like.

A lossy index is built according to the proposed method. The lossy index comprises a series of flat histograms with hourly, daily, monthly and yearly time resolution. The column labelled "#h" in the table of Fig. 10 shows the number of flat histograms created on the yearly (y), monthly (m), daily (d) and hourly (h) level. The total number of flat histograms comprised by the hourly index is 27439. Each flat histogram comprises 256 binary bins and therefore consumes 32 bytes when stored. A total amount of storage space for storing the index is therefore 878,048 bytes, or a factor of roughly 1,000 less than the minimum size of the original numeric time-series.

The step of determining one or more matching time ranges (step S50 in Fig. 7) will now be explained for the exemplary use case.

In the exemplary use case, a search request including an amplitude range criterion such as "T>195 °C" is received. The numeric search engine (50 in Fig. 7) translates the amplitude range criterion into a bit mask 5 shown in Fig. 8.

The bit mask 5 has a structure similar to the structure of a respective flat histogram of the index (not shown). That is, the bit mask 5 comprises a plurality of bins b0-b255. Each bin is associated with a respective temperature interval (amplitude interval). For example, bin b0 is associated with a temperature interval T=0-0.78125 °C). Bin b1 is associated with a temperature interval T=0.78125 °C-1.5625 °C, and so on.

The numeric search engine (50, Fig. 7) sets every bin associated with a temperature interval that is at least partly within the temperature range specified by the amplitude range criterion to binary one, and sets any other bins to binary zero. That is, bins b249 to b255 are set to one, and bins b0 to b248 are set to zero.

Reference is now made to Fig. 9 in conjunction with Fig. 7. The numeric search engine 50 continues to traverse the yearly histograms y2015, y2016, y2017 stored as part of the index in the storage unit 30. The numeric search engine 50 combines the bit mask 50 with a respective yearly histogram y2015, y2016 and y2017 using a logical AND operation and checks whether a result of the logical AND operation is non-zero.

It is noted, that herein is assumed that in the index a "binary flag indicating occurrence of a matching reading" is implemented as binary one, and a "binary flag indicating no occurrence" is implemented as binary zero.

If the result of the logical AND operation is zero for one of the years, then it is known that in the corresponding year, there is no matching reading in the numeric time-series that matches the amplitude range criterion, and the numeric search engine 50 does not descend down into the monthly, daily or hourly histograms corresponding to the corresponding year.

In the example shown in Fig. 9, only the yearly histogram y2017 indicates a matching reading (comprises a binary flag indicating occurrence of a matching reading). The numeric search engine 50 descends down into the monthly histograms m01-m12 corresponding to year 2017.

In a manner similar to the manner described with the yearly histograms, the numeric search engine 50 identifies monthly histogram m03 as the only monthly histogram indicating a matching reading, and descends further down to identify daily histogram d0330 as the only day having a matching reading. Finally, the numeric search engine 50 descends down to the hourly level and identifies hourly histograms h033001, h033019, h033020, h033021 and h033022 as hourly histograms indicating a matching reading.

Based on the index traversal described hereinabove, the numeric search engine 50 determines the time range from 01:00 to 02:00 on March 30, 2017, and the time range from 19:00 to 23:00 on March 30, 2017, as the matching time ranges to be output by the transmitting section 60 of the server level API of the range search device 1.

Fig. 10 shows a table illustrating numbers of available histograms on a yearly (y), monthly (m), daily (d) and hourly (h) level (column "#h"), and numbers of traversed histograms (column "#c") that have been checked or traversed in the exemplary processing described hereinabove.

Attention is drawn to the fact that the index comprises a total of 27439 histograms, but only 70 histograms have been traversed to determine the desired response.

In other words, instead of traversing at least 757,555,200 bytes of numeric time-series data in a linear search, or traversing 841,728 bytes of histogram data corresponding to 26304 hourly histograms, only 2,240 bytes of histogram data corresponding to 70 histograms - 3 yearly histograms, 12 monthly histograms, 31 daily histograms and 24 hourly histograms - were traversed. A processing time for providing the response may therefore be significantly reduced.

A practical use case is outlined briefly. A data warehouse was set up comprising 2 to 10 years of historical data from 85000 sensors installed in a total of 67 pieces of industrial machinery such as gas turbines. The amount of storage space used in the data warehouse for storing the 86000 numeric-time-series was 10 terabytes. A computer program product implementing the proposed computerized based method was installed and executed on an industry-standard laptop. An index was built according to the proposed method. The amount of storage space for storing the index on the industry-standard laptop was 67 gigabytes. The processing time used by the industry-standard laptop to provide a response to a range search request according to the proposed method was in a sub-second range.

Although the present invention has been described in accordance with an exemplary embodiment, an exemplary use case and preferred variants thereof, it is obvious for the person skilled in the art that modifications are possible in all embodiments, use cases and variants.

The exemplary embodiment and its variants mainly referred to temperature readings, however, the proposed method and computerized device may be used with any kind of readings, such as pressure readings, power readings and any other analog or discrete readings, signals and the like.

The personal computer 4, the web client and the REST API are merely examples, and the range search request may be transmitted and the response may be received by any entity using any technology. Herein, for example, the range search device and the transmitting and receiving entity may each be implemented in hardware or software. When implemented in hardware, the range search device and the transmitting and receiving entity may be implemented as separate devices or as one integral device. When implemented in software, respective pieces of software implementing the range search device and the transmitting and receiving entity may be installed and executed on separate computing devices or on a same computing device.

The index according to various preferred variants of the exemplary embodiment was described as including a plurality of quantizations (each quantization including a plurality of histograms) of the numeric time-series into a series of different time intervals according to an hourly, daily, monthly and yearly time resolution. However, any other time resolution may be used. For example, the highest time resolution may be higher than one hour and may for example be one minute or one second. Also, the lower time resolutions are not necessarily limited to time resolutions such as days, months and years. It may be beneficial to create the plurality of quantizations according to a strictly logarithmic series of time resolutions. For example, time resolutions of 1 hour, 10 hours, 100 hours, 1000 hours, 10000 hours and so on could be used instead.

References to bits, bytes and so on are merely by way of example. For example, a bin of a respective flat histogram could also consume more than one bit of storage space even if the histogram is a flat histogram.

The use of flat histograms is not required. Histograms with counting bins may be used instead. In this case, the computerized device may be configured to provide information , about a frequency of occurrence of matching readings in the one or more matching time ranges as part of the response to the search request.

In the exemplary embodiment, the fourth and sixth entity have mainly been described as sections of a serving layer API 40, 60, which may be configured for communication via a wireless or wired network. However, other entities and steps for receiving the search request and outputting the time range are conceived, such as input and output through a web interface or another type or graphical user interface.

In some variants, the search request may be received from an automated monitoring device of an industrial facility from which the numeric time-series data originates, and the time range may be output to the automated monitoring device in response to the search request. Based on the determined time range, the automated monitoring device may be configured to perform a maintenance operation such as changing an operating state of the industrial facility.

In the exemplary embodiment, a single numeric time-series and a corresponding index have been described. However, the teachings disclosed herein are also applicable to a computerized device and method for performing a range search in numeric time-series data including a plurality of numeric time-series. In this case, a plurality of indices may be derived, one for each numeric time-series. Search requests including logical expressions and amplitude range criteria for a number of different numeric time-series may be supported, such as "Find when temperature T is between 195 °C-200 °C AND when power P is between 300-300 megawatts" or "Find when temperature T1 is between 195 °C-200 °C OR temperature T2 is between 90 °C-100 °C".

It is also contemplated that the computerized device may comprise a seventh entity configured to output a preview signal indicative of the numeric time-series.

In other words, as can be seen in Fig. 5, the index including a plurality of flat histograms may constitute a representation of the actual numeric time-series at low resolution, with each bin constituting a large "pixel". The seventh entity may be configured to sequentially output the plurality of flat histograms at a highest available time resolution in response to the fourth entity receiving a preview request. The plurality of flat histograms outputted sequentially at the highest available time resolution may constitute a preview signal that may be used by a display device to create a visualization of the numeric time-series at a preview resolution.

### Reference Numerals:

- S10-S60: method steps
- 1: range search device
- 2: industrial facility
- 3: sensor
- 4: personal computer
- 5: bit mask
- 10: first entity (crawler)
- 11: data warehouse
- 20: second and third entity (indexer)
- 30: storage unit
- 40: fourth entity (serving layer API)
- 50: fifth entity (numeric search engine)
- 60: sixth entity (serving layer API)
- 70: cache
- t: time
- T: temperature
- bnnn: bin position nnn
- hx: hourly histogram for hour x
- haabbcc: hourly histogram for month aa, day bb, hour cc
- daabb: daily histogram for month aa, day bb
- maa: monthly histogram for month aa
- yjjjj: yearly histogram for year jjjj
- #h: number of available histograms
- #c: number of checked histograms

## Claims

1. A method for performing a range search in numeric time-series data, the method comprising:
a) acquiring (S10), at least temporarily, a numeric time-series including a plurality of readings associated with time;
b) processing (S20), by a first processing unit, the acquired numeric time-series to derive an index from the acquired numeric time-series,
wherein the index is a lossy index which includes a quantization of the numeric time-series into time intervals according to a predetermined time resolution and into amplitude intervals according to a predetermined amplitude resolution,
wherein the quantization of the time-amplitude space of the numeric time-series includes, for each of the time intervals, a histogram including, for each of the amplitude intervals, a bin indicative of readings of the numeric time-series that are within the amplitude interval and are associated with a time within the time interval;
c) storing (S30) the index in a storage unit;
d) receiving (S40) a search request including an amplitude range criterion;
e) processing (S50), by a second processing unit, the index to determine a time range for which the numeric time-series is known to match the amplitude range criterion; and
f) outputting (S60) the determined time range in response to the search request.

2. The method of claim 1, **characterized in that** step c) further includes discarding the acquired time-series.

3. The method of claim 1 or 2, **characterized in that** a respective histogram is a flat histogram, wherein a respective bin is a binary flag indicative of whether the numeric time-series includes at least one reading that is within the amplitude interval and is associated with a time within the time interval.

4. The method of any of claim 1 to 3, **characterized in that** the lossy index includes a plurality of quantizations of the numeric time-series into a series of different time intervals according to different predetermined time resolutions.

5. The method of claim 4, **characterized in**
**that** the plurality of different predetermined time resolutions is a logarithmic series of time resolutions.

6. The method of any of claims 1 to 5, **characterized in**
**that** the acquiring step a) (S10) is executed repeatedly for different portions of the numeric time-series; and
the processing step b) (S20) to derive the index includes creating the index upon a first execution of the acquiring step a) (S10), and includes updating the index upon each subsequent execution of the acquiring step a) (S10).

7. The method of any of claim 1 to 6, **characterized in**
**that** the time range determined in step e) (S50) is a time range that includes a time for which the numeric time-series is known to include at least one reading within an amplitude range specified by the amplitude range criterion, and excludes a time for which the numeric time-series is known not to include any reading within the specified amplitude range.

8. The method of any of claims 1 to 7, **characterized in that** a non-contiguous and non-overlapping plurality of smallest time ranges matching the amplitude range criterion is determined in step e) (S50) and output in step f) (S60).

9. The method of any of claims 1 to 8, **characterized in**
**that** in step d) (S40), the search request includes a logical expression formed by one or more amplitude range criteria and one or more logical operators, and
in step e) (S50), a time range is determined for which the numeric time-series is known to match the logical expression.

10. The method of any of claims 1 to 9, **characterized in that** in step a) (S10), the numeric time-series is acquired from a sensor (3) installed in an industrial facility (2).

11. A computer program product comprising a program code for executing the method of any of claims 1 to 10 when run on at least one computer.

12. A computerized device (1) for performing a range search in numeric time-series data, the computerized device (1) comprising at least one processing unit and a storage unit (30) and further comprising:
a) a first entity (10) configured to acquire, at least temporarily, a numeric time-series including a plurality of readings associated with time;
b) a second entity (20) configured to process the acquired numeric time-series to derive an index from the acquired numeric time-series,
wherein the index is a lossy index which includes a quantization of the numeric time-series into time intervals according to a predetermined time resolution and into amplitude intervals according to a predetermined amplitude resolution,
wherein the quantization of the time-amplitude space of the numeric time-series includes, for each of the time intervals, a histogram including, for each of the amplitude intervals, a bin indicative of readings of the numeric time-series that are within the amplitude interval and are associated with a time within the time interval;
c) a third entity (20) configured to store the index;
d) a fourth entity (40) configured to receive a search request including an amplitude range criterion;
e) a fifth entity (50) configured to process the index to determine a time range for which the numeric time-series is known to match the amplitude range criterion; and
f) a sixth entity (60) configured to output the determined time range.

## Patentansprüche

1. Verfahren zur Durchführung einer Bereichssuche in numerischen Zeitreihendaten, wobei das Verfahren umfasst:
a) Erfassen (S10), zumindest vorübergehend, einer numerischen Zeitreihe, aufweisend eine Mehrzahl von mit der Zeit verknüpften Ablesungen;
b) Verarbeiten, (S20), durch eine erste Verarbeitungseinheit, der erfassten numerischen Zeitreihe, um einen Index aus der erfassten numerischen Zeitreihe abzuleiten,
wobei der Index ein verlustbehafteter Index ist, der eine Quantifizierung der numerischen Zeitreihe in Zeitintervalle entsprechend einer vorbestimmten Zeitauflösung und in Amplitudenintervalle entsprechend einer vorbestimmten Amplitudenauflösung aufweist,
wobei die Quantifizierung des Zeitamplitudenraums der numerischen Zeitreihe für jedes der Zeitintervalle ein Histogramm aufweist, das für jedes der Amplitudenintervalle eine Klasse ("Bin") aufweist, die Ablesungen der numerischen Zeitreihe angibt, die innerhalb des Amplitudenintervalls sind und die mit einer Zeit innerhalb des Zeitintervalls verknüpft sind;
c) Speichern (S30) des Index in einer Speichereinheit;
d) Empfangen (S40) einer Suchanforderung, aufweisend ein Amplitudenbereichskriterium;
e) Verarbeiten (S50), durch eine zweite Verarbeitungseinheit, des Index, um einen Zeitbereich zu bestimmen, für den bekannt ist, dass die numerische Zeitreihe dem Amplitudenbereichskriterium entspricht; und
f) Ausgeben (S60) des ermittelten Zeitbereichs in Reaktion auf die Suchanforderung.

2. Verfahren nach Anspruch 1, **dadurch gekennzeichnet, dass** Schritt c) ferner das Verwerfen der erfassten Zeitreihe aufweist.

3. Verfahren nach Anspruch 1 oder 2, **dadurch gekennzeichnet, dass** ein dazugehöriges Histogramm ein flaches Histogramm ist, wobei eine dazugehörige Klasse ein binäres Flag ist, das angibt, ob die numerische Zeitreihe mindestens einen Ablesewert aufweist, der innerhalb des Amplitudenintervalls ist und der mit einer Zeit innerhalb des Zeitintervalls verknüpft ist.

4. Verfahren nach einem der Ansprüche 1 bis 3, **dadurch gekennzeichnet,**
**dass** der verlustbehaftete Index eine Mehrzahl von Quantifizierungen der numerischen Zeitreihe in eine Reihe unterschiedlicher Zeitintervalle entsprechend unterschiedlichen vorbestimmten Zeitauflösungen aufweist.

5. Verfahren nach Anspruch 4, **dadurch gekennzeichnet,**
**dass** die Mehrzahl unterschiedlicher vorbestimmter Zeitauflösungen eine logarithmische Reihe von Zeitauflösungen ist.

6. Verfahren nach einem der Ansprüche 1 bis 5, **dadurch gekennzeichnet,**
**dass** der Erfassungsschritt a) (S10) wiederholt für unterschiedliche Teile der numerischen Zeitreihe ausgeführt wird; und
**dass** der Verarbeitungsschritt b) (S20) zum Ableiten des Index das Erzeugen des Index bei einer ersten Ausführung des Erfassungsschritts a) (S10) und das Aktualisieren des Index bei jeder nachfolgenden Ausführung des Erfassungsschritts a) (S10) aufweist.

7. Verfahren nach einem der Ansprüche 1 bis 6, **dadurch gekennzeichnet,**
**dass** der in Schritt e) (S50) ermittelte Zeitbereich ein Zeitbereich ist, der eine Zeit aufweist, für die bekannt ist, dass die numerische Zeitreihe mindestens einen Ablesewert innerhalb eines durch das Amplitudenbereichskriterium angegebenen Amplitudenbereichs aufweist, und der eine Zeit ausschließt, für die bekannt ist, dass die numerische Zeitreihe keinen Ablesewert innerhalb des angegebenen Amplitudenbereichs aufweist.

8. Verfahren nach einem der Ansprüche 1 bis 7, **dadurch gekennzeichnet,**
**dass** eine nicht zusammenhängende und sich nicht überlappende Mehrzahl von kleinsten Zeitbereichen, die dem Amplitudenbereichskriterium entsprechen, in Schritt e) (S50) ermittelt und in Schritt f) (S60) ausgegeben wird.

9. Verfahren nach einem der Ansprüche 1 bis 8, **dadurch gekennzeichnet,**
**dass** in Schritt d) (S40) die Suchanforderung einen durch eines oder mehrere Amplitudenbereichskriterien und einen oder mehrere logische Operatoren gebildeten logischen Ausdruck aufweist, und dass in Schritt e) (S50) ein Zeitbereich bestimmt wird, für den bekannt ist, dass die numerische Zeitreihe dem logischen Ausdruck entspricht.

10. Verfahren nach einem der Ansprüche 1 bis 9, **dadurch gekennzeichnet,**
**dass** in Schritt a) (S10) die numerische Zeitreihe von einem in einer Industrieanlage (2) installierten Sensor (3) erfasst wird.

11. Computerprogrammprodukt, umfassend einen Programmcode zum Durchführen des Verfahrens nach einem der Ansprüche 1 bis 10 bei Ausführung auf mindestens einem Computer.

12. Computergestützte Einrichtung (1) zum Durchführen einer Bereichssuche in numerischen Zeitreihendaten, wobei die computergestützte Einrichtung (1) mindestens eine Verarbeitungseinheit und eine Speichereinheit (30) umfasst und ferner umfasst:
a) eine erste Entität (10), ausgelegt zum zumindest vorübergehenden Erfassen einer numerischen Zeitreihe, aufweisend eine Mehrzahl von mit der Zeit verknüpften Ablesungen;
b) eine zweite Entität (20), ausgelegt zum Verarbeiten der erfassten numerischen Zeitreihe, um aus der erfassten numerischen Zeitreihe einen Index abzuleiten,
wobei der Index ein verlustbehafteter Index ist, der eine Quantifizierung der numerischen Zeitreihe in Zeitintervalle gemäß einer vorbestimmten Zeitauflösung und in Amplitudenintervalle gemäß einer vorbestimmten Amplitudenauflösung aufweist,
wobei die Quantifizierung des Zeitamplitudenraums der numerischen Zeitreihe für jedes der Zeitintervalle ein Histogramm aufweist, dass für jedes der Amplitudenintervalle eine Klasse ("Bin") aufweist, die Ablesungen der numerischen Zeitreihe angibt, die innerhalb des Amplitudenintervalls sind und die mit einer Zeit innerhalb des Zeitintervalls verknüpft sind;
c) eine dritte Entität (20), ausgelegt zum Speichern des Index;
d) eine vierte Entität (40), ausgelegt zum Empfangen einer Suchanforderung, aufweisend ein Amplitudenbereichskriterium;
e) eine fünfte Entität (50), ausgelegt zum Verarbeiten des Index, um einen Zeitbereich zu bestimmen, für den bekannt ist, dass die numerische Zeitreihe dem Amplitudenbereichskriterium entspricht; und
f) eine sechste Entität (60), ausgelegt zum Ausgeben des ermittelten Zeitbereichs.

## Revendications

1. Procédé de réalisation d'une recherche de plage dans des données de série chronologique numérique, le procédé comprenant
a) l'acquisition (S10), au moins temporairement, d'une série chronologique numérique comprenant une pluralité de lectures associées au temps ;
b) le traitement (S20), par une première unité de traitement, de la série chronologique numérique acquise pour dériver un indice de la série chronologique numérique acquise,
dans lequel l'indice est un indice à perte qui comporte une quantification de la série chronologique numérique en intervalles de temps selon une résolution temporelle prédéterminée et en intervalles d'amplitude selon une résolution d'amplitude prédéterminée,
dans lequel la quantification de l'espace temps-amplitude de la série chronologique numérique comporte, pour chacun des intervalles de temps, un histogramme comportant, pour chacun des intervalles d'amplitude, une case indicative de lectures de la série chronologique numérique qui sont comprises dans l'intervalle d'amplitude et qui sont associées à un temps dans l'intervalle de temps ;
c) le stockage (S30) de l'indice dans une unité de stockage ;
d) la réception (S40) d'une demande de recherche comportant un critère de plage d'amplitude ;
e) le traitement (S50), par une deuxième unité de traitement, de l'indice pour déterminer une plage de temps pendant laquelle il est connu que la série chronologique numérique correspond au critère de plage d'amplitude ; et
f) la sortie (S60) de la plage de temps déterminée en réponse à la demande de recherche.

2. Procédé selon la revendication 1, **caractérisé en ce que** l'étape c) comporte en outre l'élimination des séries chronologiques acquises.

3. Procédé selon la revendication 1 ou 2, **caractérisé en ce**
**qu'**un histogramme respectif est un histogramme plat, dans lequel une case respective est un indicateur binaire indiquant que la série chronologique numérique comporte ou non au moins une lecture comprise dans l'intervalle d'amplitude et associée à un temps dans l'intervalle de temps.

4. Procédé selon l'une quelconque des revendications 1 à 3, **caractérisé en ce que**
l'indice à perte comporte une pluralité de quantifications de la série chronologique numérique en une série d'intervalles de temps différents selon différentes résolutions temporelles prédéterminées.

5. Procédé selon la revendication 4, **caractérisé en ce**
**que** la pluralité de différentes résolutions temporelles prédéterminées est une série logarithmique de résolutions temporelles.

6. Procédé selon l'une quelconque des revendications 1 à 5, **caractérisé en ce**
**que** l'étape d'acquisition a) (S10) est exécutée à plusieurs reprises pour différentes parties de la série chronologique numérique ; et
l'étape de traitement b) (S20) pour dériver l'indice comporte la création de l'indice lors d'une première exécution de l'étape d'acquisition a) (S10), et comporte la mise à jour de l'indice à chaque exécution ultérieure de l'étape d'acquisition a) (S10).

7. Procédé selon l'une quelconque des revendications 1 à 6, **caractérisé en ce**
**que** la plage de temps déterminée à l'étape e) (S50) est une plage de temps qui comporte une période pendant laquelle il est connu que la série chronologique numérique comporte au moins une lecture dans une plage d'amplitude spécifiée par le critère de plage d'amplitude, et qui exclut une plage de temps pendant laquelle il est connu que la série chronologique numérique ne comporte aucune lecture dans la plage d'amplitude spécifiée.

8. Procédé selon l'une quelconque des revendications 1 à 7, **caractérisé en ce**
**qu'**une pluralité non contiguë et non chevauchante des plus petites plages de temps correspondant au critère de la plage d'amplitude est déterminée à l'étape e) (S50) et délivrée à l'étape f) (S60).

9. Procédé selon l'une quelconque des revendications 1 à 8, **caractérisé en ce qu'**à l'étape d) (S40), la demande de recherche comporte une expression logique formée par un ou plusieurs critères de plage d'amplitude et un ou plusieurs opérateurs logiques, et
à l'étape e) (S50), une plage de temps pendant laquelle il est connu que la série chronologique numérique correspond à l'expression logique est déterminée.

10. Procédé selon l'une quelconque des revendications 1 à 9, **caractérisé en ce qu'**à l'étape a) (S10), la série chronologique numérique est acquise à partir d'un capteur (3) installé dans une installation industrielle (2).

11. Produit de programme d'ordinateur comprenant un code de programme pour réaliser le procédé selon l'une quelconque des revendications 1 à 10 lorsqu'il est exécuté sur au moins un ordinateur.

12. Dispositif informatisé (1) pour réaliser une recherche d'intervalles dans des données de séries chronologiques numériques, le dispositif informatisé (1) comprenant au moins une unité de traitement et une unité de stockage (30) et comprenant en outre :
a) une première entité (10) configurée pour acquérir, au moins temporairement, une série chronologique numérique comprenant une pluralité de lectures associées au temps ;
b) une deuxième entité (20) configurée pour traiter la série chronologique numérique acquise afin de dériver un indice de la série chronologique numérique acquise,
dans lequel l'indice est un indice à perte comportant une quantification de la série chronologique numérique en intervalles de temps selon une résolution temporelle prédéterminée et en intervalles d'amplitude selon une résolution d'amplitude prédéterminée,
dans lequel la quantification de l'espace temps-amplitude de la série chronologique numérique comporte, pour chacun des intervalles de temps, un histogramme comportant, pour chacun des intervalles d'amplitude, une case indicative de lectures de la série chronologique numérique qui sont comprises dans l'intervalle d'amplitude et qui sont associées à un temps dans l'intervalle de temps ;
c) une troisième entité (20) configurée pour stocker l'indice ;
d) une quatrième entité (40) configurée pour recevoir une demande de recherche comportant un critère de plage d'amplitude ;
e) une cinquième entité (50) configurée pour traiter l'indice afin de déterminer une plage de temps pendant laquelle il est connu que la série chronologique numérique correspond au critère de la plage d'amplitude ; et
f) une sixième entité (60) configurée pour produire la plage de temps déterminée.
